(19)

Europäisches
Patentamt

European
Patent Office

Office européen
des brevets

(11)  EP 2 445 132 A1

(12)  **EUROPEAN PATENT APPLICATION**
published in accordance with Art. 153(4) EPC

| | |
|---|---|
| (43) Date of publication:<br>**25.04.2012 Bulletin 2012/17** | (51) Int Cl.:<br>**H04L 1/00** (2006.01) |
| (21) Application number: **10842879.8** | (86) International application number:<br>**PCT/CN2010/077078** |
| (22) Date of filing: **17.09.2010** | |
| | (87) International publication number:<br>**WO 2011/085596 (21.07.2011 Gazette 2011/29)** |

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO SE SI SK SM TR**<br><br>(30) Priority: **15.01.2010  CN 201010003432**<br><br>(71) Applicant: **ZTE Corporation**<br>**Shenzhen, Guangdong 518057 (CN)**<br><br>(72) Inventors:<br>• **LIANG, Chunli**<br>  **Guangdong 518057 (CN)** | • **XIA, Shuqiang**<br>  **Guangdong 518057 (CN)**<br>• **DAI, Bo**<br>  **Guangdong 518057 (CN)**<br>• **YU, Bin**<br>  **Guangdong 518057 (CN)**<br><br>(74) Representative: **Manitz, Finsterwald & Partner GbR**<br>**Martin-Greif-Strasse 1**<br>**80336 München (DE)** |

(54)  **METHOD FOR DETERMINING PHYSICAL UPLINK CONTROL CHANNEL RESOURCE IN MULTI-CARRIER SYSTEM**

(57)  The present invention discloses a method for determining a physical uplink control channel resource in a multi-carrier system, which includes: demodulating a Physical Downlink Shared Channel (PDSCH) according to a Physical Downlink Control Channel (PDCCH) corresponding to the PDSCH of a downlink component carrier i, when a downlink component carrier j where the PDCCH is located and an uplink component carrier k are a matched carrier pair, a user equipment determining a channel resource index $n_{PUCCH,i}$ of a Physical Uplink Control Channel (PUCCH) where an acknowledgement message corresponding to downlink component carrier i is located in the PUCCH in the uplink component carrier k according to a mapping relationship of an index of a Control Channel Element (CCE) of the PDCCH. The present invention provides a set of the complete scheme for determining the ACK/NACK channel resource, which is applied in a system using the carrier aggregation technique and implements to transmit the ACK/NACK message in the PUCCH.

FIG. 3

**Description**

Technical Field

The present invention relates to the field of digital communication, and more especially, to a method for determining a physical uplink control channel resource in a multi-carrier system.

Background of the Related Art

The rapid development of digital communication systems has higher requirements on the reliability of data communication, however, in severe channels, especially in an environment with the high data rate or high speed movement, multi-path interference and Doppler frequency shift etc. severely affects the system performance. Therefore, effective error control techniques, in particular, the Hybrid Automatic Repeat Request (referred to as HARQ) technique, have become a hot topic in the field of communication.

In the HARQ mode, the codes transmitted by the transmitting end are not only able to be used for error detection but also for error correction to some extent. The decoder at the receiving end first detects the errors after receiving the codeword, and automatically corrects the errors if the errors are within its code error correction capability; if there are relatively many errors and these errors are beyond the decoder's code error correction capability but the errors can be detected, the receiving end transmits a decision signal to the transmitting end through the feedback channel to demand the transmitting end to retransmit the information. In an Orthogonal Frequency Division Multiplexing (OFDM) system, the Acknowledgement/Negative Acknowledgement (ACK/NACK) message is used to indicate correct or incorrect transmission, and thus to judge whether a retransmission is needed or not therewith.

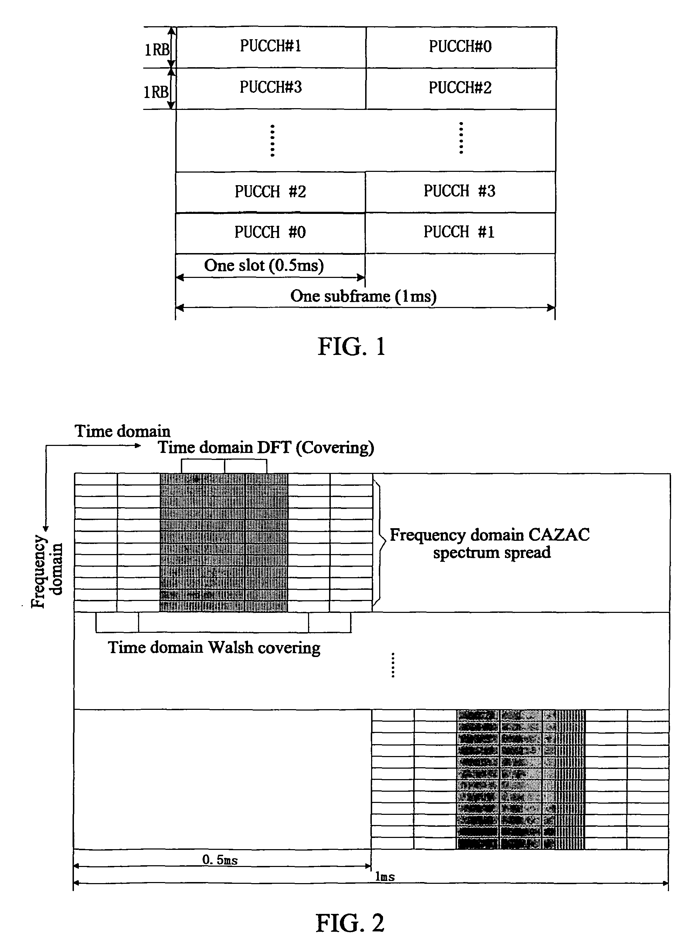

Currently, in the downlink HARQ of the Long Term Evolution (LTE) system, when the User Equipment (UE) does not have a Physical Uplink Shared Channel (PUSCH) in the current subframe, the ACK/NACK message of the Physical Downlink Shared Channel (PDSCH) is transmitted on the Physical Uplink Control Channel (PUCCH). As shown in FIG. 1, one physical uplink control channel occupies one resource block (one resource block occupies 12 subcarriers) in the frequency domain, and spans two slots, i.e. one subframe (1ms), with different numbers of symbols based on different cyclic prefixes used by the current subframe in the time domain. In addition, frequency hopping is applied for the control channel in the two slots to obtain diversity gain in the frequency domain. The physical uplink control channel of each UE in the cell is code division multiplexed. Since the number of the UEs that can be multiplexed in one resource block is limited, when the number of the UEs that need to be transmitted on the physical uplink control channel simultaneously is more than the number of UEs that can be multiplexed in one resource block, another resource block should be used, that is, the code division plus frequency division is used to multiplex the physical uplink control channel of each UE in the cell.

The present invention focuses on the problem of determining the ACK/NACK channel resources, therefore, in order to facilitate understanding, the PUCCH format 1a/1b for carrying the ACK/NACK is briefly described herein.

The ACK/NACK message is formed as a modulated symbol through the Binary Phase Shift Keying (BPSK) or Quadrature Phase Shift Keying (QPSK) modulation (corresponding to the format 1a/1b respectively). First, the spectrum spread (the spreading sequence is a Constant Amplitude Zero Auto-Correlation (CAZAC) sequence with the length of 12) with a spreading factor of 12 is performed on the modulated symbol in the frequency domain, and then the time spread of a Walsh code with a length of 4 is performed on the modulated symbol in the time domain, and then the modulated symbol is mapped to the information symbol corresponding to the control channel format 1 as shown in FIG. 2, and finally, forms the signal to be transmitted in one slot in company with the reference signal. Therefore, the number of UEs transmitting the ACK/NACK simultaneously that can be multiplexed in one resource block is determined by the number of relatively short time domain orthogonal codes and the number of cyclic shift amount of the available CAZAC sequences allowed in the same one orthogonal code. When the cyclic prefix is the normal cyclic prefix, the number of available time domain orthogonal codes is 3, and when the cyclic prefix is an extended cyclic prefix, the number of available time domain orthogonal codes is 2, and the number of cyclic shift amount of the available CAZAC sequences allowed in the same one orthogonal code can be different according to different application scenarios.

In the LTE system, there are two ways for the UE determining the channel resource index $n_{PUCCH}$ of the PUCCH for carrying the ACK/NACK message: the one is to obtain the channel resource index $n_{PUCCH}$ through higher layer signaling, the other is to obtain the channel resource index $n_{PUCCH}$ via the implicit mapping relationship of the first index of the Control Channel Element (CCE) where the Physical Downlink Control Channel (PDCCH) is located. Therefore, in one uplink carrier, the region of the ACK/NACK channel resource is divided into two regions, the one is a region configured by the higher layer signaling, the other is a dynamic region implicitly mapped based on the index of the CCE of the PDCCH. Once the UE obtains the channel resource index $n_{PUCCH}$ of the PUCCH, the index of the resource block where the UE is actually located when transmitting the ACK/NACK, the index of the used time domain orthogonal code and the cyclic shift amount of the corresponding CAZAC sequence can be calculated according to the channelization formula defined in the protocol.

The International Mobile Telecommunications-Advanced (IMT-Advanced) systems can achieve high speed data transmission and has a relatively large system capacity. In cases of the low mobility and hotspot coverage, the peak rate of the IMT-Advanced system can reach 1Gbit/s, and in the case of the high speed movement and wide coverage, the peak rate of IMT-Advanced systems can reach 100Mbit/s.

In order to meet the requirements of the International Telecommunication Union-Advanced (ITU-Advanced), as the evolution standard of the LTE, the Long Term Evolution Advanced (LTE-A) system needs to support a broader system bandwidth (up to 100MHz), and needs to be backward compatible with existing LTE standards. On the basis of the existing LTE system, the bandwidth of the LTE system can be aggregated to acquire a broader bandwidth, this technique is called as the Carrier Aggregation (CA), and this technique can improve the spectrum efficiency of the IMT-Advance system and ease the shortage of spectrum resources, thereby optimizing the utilization of spectrum resources.

After introducing the CA, in the current discussion with respect to the relationship among the downlink component carrier and the PDSCH transport block as well as the HARQ process, a basic working assumption is that when the spatial multiplexing is not used, one downlink component carrier corresponds to one PDSCH transport block as well as one HARQ process. That is, the UE needs to feed back 1bit ACK/NACK information for each PDSCH transport block of each component carrier.

In addition, a current working assumption of the LTE-A is the PDSCH transmission of a non Semi-Persistent Scheduling (SPS) on each downlink component carrier has a corresponding PDCCH to carry the corresponding downlink configuration information, and the PDCCH for carrying the downlink configuration information and the PDSCH can be in the same component carrier (when the Downlink Control Information (DCI) does not have a Carrier Indicator (CI)) or in different component carriers (when CI is introduced in the DCI).

In the LTE-A systems that apply the CA technique, the uplink bandwidth and downlink bandwidth might include multiple component carriers. When the base station has the PDSCH scheduled to one UE in multiple downlink component carriers and the UE does not have a PUSCH to be transmitted in the current subframe, the UE needs to feed back the multiple ACK/NACK message of the PDSCH corresponding to the multiple downlink component carriers on PUCCH. Therefore, in LTE-A, even in the Frequency Division Duplexing (FDD) system, the UE needs to feed back the multiple ACK/NACK messages of the PDSCH corresponding to the multiple downlink component carriers in one uplink subframe, which is different from the FDD system in the Rel-8 LTE.

There can be a variety of methods for transmitting multiple ACK/NACK messages on PUCCH. One direct method is to use the same method as the LTE to respectively feed back multiple ACK/NACK messages on multiple PUCCHs (called as the NxPUCCH mode) corresponding to multiple downlink component carriers. Another method is to performing bundling (i.e. the logical AND operation) on the ACK/NACK messages of multiple downlink carriers and then to feed back the bundled ACK/NACK messages in a single PUCCH (called as the bundling mode). There is also a channel selection method based on the Time Division Duplexing (TDD) system (also known as multiplexing with channel selection, referred to as multiplexing), and the core idea of this method is to use different PUCCHs and different modulation symbols in the channel to represent different feedback states of all the carriers.

The above multiple methods for transmitting the ACK/NACK message all need to use multiple available PUCCHs. Therefore, how to determine multiple ACK/NACK channel resource indexes to feed back multiple ACK/NACK messages is a problem to be solved.

Summary of the Invention

The technical problem to be solved in the present invention is to provide a method for determining a physical uplink control channel resource in a multi-carrier system, which completes the procedure to transmit the ACK/NACK message on PUCCH in a system applying the carrier aggregation technique.

To solve the aforementioned problem, the present invention provides a method for determining a physical uplink control channel resource in a multi-carrier system, and the method comprises:

a user equipment using different Physical Uplink Control Channels (PUCCH) and different modulation symbols on PUCCH to represent a feedback state of downlink component carriers, a base station configuring a downlink component carrier set for the user equipment through higher layer signaling, and the downlink component carrier set includes N downlink component carriers, and the user equipment demodulating Physical Downlink Shared Channel (PDSCH) on the N downlink component carriers for the user equipment to acquire N acknowledgement messages corresponding to the N downlink component carriers, denoting $HARQ\_ACK(i)$ as the acknowledgement message corresponding to an $i^{th}$ downlink component carrier; if the user equipment does not detect the PDSCH in the downlink component carrier, determining that the acknowledgement message corresponding to the downlink component carrier is a negative acknowledgement message;

wherein a way for determining a channel resource index for transmitting the acknowledgement messages comprises:

demodulating the PDSCH in accordance with a Physical Downlink Control Channel (PDCCH) corresponding to the PDSCH of the downlink component carrier i, when a downlink component carrier j where the PDCCH is located and an uplink component carrier k are a matched carrier pair, the user equipment determining a channel resource index $n_{PUCCH,i}$ of the PUCCH in the uplink component carrier k corresponding to the downlink component carrier i according to a mapping relationship between an index of a Control Channel Element (CCE) of the PDCCH and the index of PUCCH;

demodulating the PDSCH in accordance with the PDCCH corresponding to the PDSCH of the downlink component carrier i, and when the downlink component carrier j where the PDCCH is located and the uplink component carrier k are not a matched carrier pair, the user equipment determining the channel resource index $n_{PUCCH,i}$ of the PUCCH in the uplink component carrier k corresponding to the downlink component carrier i according to higher layer signaling;

when the PDSCH of the downlink component carrier i does not has a corresponding PDCCH for demodulation, the user equipment determining the channel resource index $n_{PUCCH,i}$ of the PUCCH in the uplink component carrier k corresponding to the downlink component carrier i according to higher layer signaling; where i and j are integers from 0 to N-1, and k is an uplink component carrier number and is an integer.

The uplink component carrier k is the uplink component carrier for which the user equipment is using the PUCCH to transmit the modulated symbol.

The downlink component carrier j and the uplink component carrier k being the matched carrier pair refers that: the downlink component carrier j and the uplink component carrier k have a system default transmitting and receiving frequency spacing, or refers that the uplink carrier frequency in a system message of the downlink component carrier j is the same as the central frequency of the uplink component carrier k, and the matched relationship is cell-specific.

The way for determining the channel resource index $n_{PUCCH,i}$ of the PUCCH in the uplink component carrier k corresponding to the downlink component carrier i according to the mapping relationship between the index of the CCE of the PDCCH and the index of PUCCH is:

$$n_{PUCCH,i} = n_{CCE,j} + \sum_{p=0}^{j'-1} N_{CCE,p} + N_{PUCCH,k}$$

where
$n_{CCE,j}$ is a first index of the CCE of the PDCCH in the downlink component carrier j;

$\sum_{p=0}^{j'-1} N_{CCE,p}$ is a total number of the CCEs of the PDCCHs of the first j' downlink component carriers in the downlink component carrier set which is matched with the uplink component carrier k; j' is the number of the downlink component carrier j in the downlink component carrier set that is matched with the uplink component carrier k;

$N_{PUCCH,k}$ is a parameter related to the PUCCH and configured by higher layer signaling for the uplink component carrier k.

When PDSCH transmission of the downlink component carrier i includes two codewords, the *HARQ_ACK(i)* denotes the 1bit acknowledgement message after executing a logical AND operation for the two codewords; when the PDSCH transmission of the downlink component carrier i includes one codeword, the *HARQ_ACK(i)* denotes the 1bit acknowledgement message of the codeword.

The method also comprises:

the user equipment selecting one PUCCH from the N PUCCHs from $n_{PUCCH,0}$ to $n_{PUCCH,N-1}$ that are available to transmit the 2bit message c(0)c(1) according to a combination of the states of the N acknowledgement messages from *HARQ_ACK(0)* to *HSRQ_ACK(N-1)*.

The combination of the states of the N acknowledgement messages from HARQ_ACK(0) to HARQ-ACK(N-1) and the PUCCH that is selected as well as the 2bit message c(0)c(1) that is transmitted conform to a mapping relationship appointed between the base station and the user equipment, and the mapping relationship is related to a number N of downlink component carriers included in the downlink component carrier set configured to the user equipment.

The way of the user equipment using different physical uplink control channels and different modulated symbols in the physical uplink control channels to represent the feedback state of the downlink component carrier is configured by a higher layer signaling.

To solve the aforementioned problem, the present invention also provides a method for determining a physical uplink control channel resource in a multi-carrier system, which comprises:

in a case that a user equipment transmits acknowledgement messages on multiple Physical Uplink Control Channels (PUCCHs) of an uplink component carrier k, the user equipment demodulating the PDSCH on N downlink component carriers for the user equipment to acquire N acknowledgement messages corresponding to the N downlink component carriers, denoting $HARQ\_ACK(i)$ as the acknowledgement message corresponding to an $i^{th}$ downlink component carrier;

wherein the way for determining a channel resource index for transmitting the acknowledgement message comprises:

demodulating the PDSCH in accordance with a Physical Downlink Control Channel (PDCCH) corresponding to the PDSCH of the downlink component carrier i, when a downlink component carrier j where the PDCCH is located and an uplink component carrier k are a matched carrier pair, the user equipment determining a channel resource index $n_{PUCCH,i}$ of the PUCCH where the acknowledgement message corresponding to the downlink component carrier i is located in the uplink component carrier k according to a mapping relationship between an index of a Control Channel Element (CCE) index of the PDCCH and the index of PUCCH;

demodulating the PDSCH in accordance with the PDCCH corresponding to the PDSCH of the downlink component carrier i, and when the downlink component carrier j where the PDCCH is located and the uplink component carrier k are not a matched carrier pair, the user equipment determining the channel resource index $n_{PUCCH,i}$ of the PUCCH where the acknowledgement message corresponding to the downlink component carrier i is located in the uplink component carrier k according to higher layer signaling;

when the PDSCH of the downlink component carrier i does not have a corresponding PDCCH for demodulation, the user equipment determining the channel resource index $n_{PUCCH,i}$ of the PUCCH where the acknowledgement message corresponding to the downlink component carrier i is located in the uplink component carrier k according to higher layer signaling;

where i and j are integers from 0 to N-1, and k is an uplink component carrier number and is an integer.

The downlink component carrier j and the uplink component carrier k being the matched carrier pair refers that: the downlink component carrier j and the uplink component carrier k have a system default transmitting and receiving frequency spacing, or refers that the uplink carrier frequency in a system message of the downlink component carrier j is the same as the central frequency of the uplink component carrier k, and the matched relationship is cell-specific.

The way for determining the channel resource index $n_{PUCCH,i}$ of the PUCCH where the acknowledgement message corresponding to the downlink component carrier i is located in the uplink component carrier k according to the mapping relationship between the index of the CCE of the PDCCH and the index of PUCCH is:

$$n_{PUCCH,i} = n_{CCE,j} + \sum_{p=0}^{j'-1} N_{CCE,p} + N_{PUCCH,k}$$

where $n_{CCE,j}$ is a first index of the CCE of the PDCCH in the downlink component carrier j;

$\sum_{p=0}^{j'-1} N_{CCE,p}$ is a total number of the CCEs of the PDCCHs of the first j' downlink component carriers in the downlink component carrier set which is matched with the uplink component carrier k; j' is the number of the downlink component carrier j in the downlink component carrier set that is matched with the uplink component carrier k;

$N_{PUCCH,k}$ is a parameter related to the PUCCH and configured by higher layer signaling for the uplink component carrier k.

The method also comprises: when PDSCH transmission of the downlink component carrier i includes two codewords, $HARQ\_ACK(i)$ denoting a 2bit message, and the user equipment performing QPSK modulation on the $HARQ\_ACK(i)$ and then transmitting the $HARQ\_ACK(i)$ on the PUCCH whose channel resource index is $n_{PUCCH,i}$ in the uplink component carrier k;

when the PDSCH transmission of the downlink component carrier i includes only one codeword, *HARQ_ACK*(*i*) denoting a 1bit message, and the user equipment performing BPSK modulation on the *HARQ_ACK*(*i*) and then transmitting the *HARQ_ACK*(*i*) on the PUCCH whose channel resource index is $n_{PUCCH,i}$ in the uplink component carrier k.

The way of the user equipment using multiple PUCCHs in one uplink component carrier to transmit the acknowledgement message corresponding to multiple downlink component carriers is configured by higher layer signaling.

To solve the aforementioned problem, the present invention also provides a method for determining a physical uplink control channel resource in a multi-carrier system, which comprises:

in a case that a user equipment uses a bundling mode to transmit a plurality of acknowledgement messages in one Physical Uplink Control Channel (PUCCH) of an uplink component carrier k, the user equipment demodulating the PDSCH on N downlink component carriers for the user equipment, and then executing a logical AND operation to acquire a 1bit acknowledgement message b(0) or a 2bit acknowledgement message b(0)b(1);

wherein a way for determining a channel resource index for transmitting the acknowledgement message comprises:

when demodulating the PDSCH in accordance with a Physical Downlink Control Channel (PDCCH) corresponding to the PDSCH of a downlink component carrier i, the user equipment determining a channel resource index $n_{PUCCH,i}$ of the PUCCH where the b(0) or b(0)b(1) is transmitted in the uplink component carrier k according to a mapping relationship between the index of a Control Channel Element (CCE) of the PDCCH and the index of PUCCH;

when the PDSCH of the downlink component carrier i does not have a corresponding PDCCH for demodulation, the user equipment determining the channel resource index $n_{PUCCH,i}$ of the PUCCH where the b(0) or b(0)b(1) is transmitted in the uplink component carrier k according to higher layer signaling, and k is an uplink component carrier number and is an integer.

i is a carrier number index corresponding to the downlink component carrier which is matched with the uplink component carrier k, or there are a plurality of downlink component carriers matched with the uplink component carrier k, i is an index of the downlink component carriers which has a default transmitting and receiving frequency spacing with the uplink component carrier, and the matching relationship is cell-specific.

The downlink component carrier j and the uplink component carrier k being the matched carrier pair refers that: the downlink component carrier j and the uplink component carrier k have a system default transmitting and receiving frequency spacing, or refers that the uplink carrier frequency in a system message of the downlink component carrier j is the same as the central frequency of the uplink component carrier k.

A way for determining the channel resource index $n_{PUCCH,i}$ of the PUCCH where the b(0) or b(0)b(1) is transmitted in the uplink component carrier k according to the mapping relationship between the index of the CCE of the PDCCH and the index of PUCCH is:

$$n_{PUCCH,i} = n_{CCE,j} + \sum_{p=0}^{j'-1} N_{CCE,p} + N_{PUCCH,k}$$

where $n_{CCE,j}$ is a first index of the CCE of the PDCCH in the downlink component carrier j;

$\sum_{p=0}^{j'-1} N_{CCE,p}$ a total number of the CCEs of the PDCCHs of the first j' downlink component carriers in the downlink component carrier set which is matched with the uplink component carrier k; j' is a number of the downlink component carrier j in the downlink component carrier set that is matched with the uplink component carrier k;

$N_{PUCCH,k}$ is a parameter related to the PUCCH and configured by higher layer signaling for the uplink component carrier k.

The method also comprises:

when detecting that the PDSCHs of a plurality of downlink component carriers include two codewords, the user equipment executing a logical AND operation among carriers on the acknowledgement message corresponding to each downlink component carrier to acquire the 2bit acknowledgement message b(0)b(1) that is bundled corresponding to the two codewords, and performing QPSK modulation for the 2bit acknowledgement message b(0)b(1), and then transmitting the 2bit acknowledgement message b(0)b(1) on the PUCCH whose channel resource index is $n_{PUCCH,i}$ in the uplink component carrier,

when detecting that the PDSCHs of a plurality of downlink component carriers include one codeword, the user equipment executing a logical AND operation among carriers on the acknowledgement message corresponding to each downlink component carrier to acquire a 1bit acknowledgement message b(0) that is bundled corresponding to the codeword stream, and performing BPSK modulation for the 1bit acknowledgement message b(0), and then transmitting the 1 bit acknowledgement message b(0) on the PUCCH whose channel resource index is $n_{PUCCH,i}$ in the uplink component carrier.

A higher layer signaling configures that the user equipment uses a bundling mode to feed back the acknowledgement message.

To solve the aforementioned problem, the present invention also provides a method for determining a physical uplink control channel resource in a multi-carrier system, which comprises:

in a case that a user equipment uses a bundling mode to transmit an acknowledgement message in one Physical Uplink Control Channel (PUCCH) of an uplink component carrier k, the user equipment demodulating the PDSCH on N downlink component carriers for the user equipment, and then executing a logical AND operation to acquire a 1bit acknowledgement message b(0) or a 2bit acknowledgement message b(0)b(1);

wherein a way for determining a channel resource index for transmitting the acknowledgement message comprises:

demodulating the PDSCH in accordance with a Physical Downlink Control Channel (PDCCH) corresponding to the PDSCH of a downlink component carrier i, and when a downlink component carrier j where the PDCCH is located and the uplink component carrier k are a matched carrier pair, the user equipment determining a channel resource index $n_{PUCCH,i}$ of the PUCCH where the b(0) or b(0)b(1) is transmitted in the uplink component carrier k according to a mapping relationship between the index of a Control Channel Element (CCE) of the PDCCH and the index of PUCCH;

demodulating the PDSCH in accordance with the PDCCH corresponding to the PDSCH of the downlink component carrier i, and when the downlink component carrier j where the PDCCH is located and the uplink component carrier k are not a matched carrier pair, the user equipment determining the channel resource index $n_{PUCCH,i}$ of the PUCCH where the b(0) or b(0)b(1) is transmitted in the uplink component carrier k according to higher layer signaling;

when the PDSCH of the downlink component carrier i does not have a corresponding PDCCH for demodulation, the user equipment determining the channel resource index $n_{PUCCH,i}$ of the PUCCH where the b(0) or b(0)b(1) is transmitted in the uplink component carrier k according to higher layer signaling; where i and j are integers from 0 to N-1, and k is an uplink component carrier number and is an integer.

i is a carrier number index corresponding to a last downlink component carrier detected by the user equipment; the downlink component carriers are numbered with a certain order, and when performing downlink scheduling, the physical downlink shared channel scheduling is performed on a corresponding carrier according to this order, and the user equipment performs demodulation also according to this order.

The downlink component carrier j where the PDCCH corresponding to the PDSCH of the downlink component carrier i and the uplink component carrier k being the matched carrier pair refers that: the downlink component carrier j and the uplink component carrier k have a system default transmitting and receiving frequency spacing, or refers that the uplink carrier frequency in a system message of the downlink component carrier j is the same as the central frequency of the uplink component carrier k, and a matched relationship is specified for a cell.

A way for determining the channel resource index $n_{PUCCH,i}$ of PUCCH where the b(0) or b(0)b(1) is transmitted in the uplink component carrier k according to the mapping relationship of the index of the CCE of the PDCCH is:

$$n_{PUCCH,i} = n_{CCE,j} + \sum_{p=0}^{j'-1} N_{CCE,p} + N_{PUCCH,k}$$

where $n_{CCE,j}$ is a first index of the CCE of the PDCCH in the downlink component carrier j;

$\sum_{p=0}^{j'-1} N_{CCE,p}$ is a total number of the CCEs of the PDCCHs of the first j' downlink component carriers in the downlink component carrier set which is matched with the uplink component carrier k; j' is a number of the downlink component carrier j in the downlink component carrier set that is matched with the uplink component carrier k;

$n_{PUCCH,k}$ is a parameter related to the PUCCH and configured by higher layer signaling for the uplink component carrier k.

The method also comprises:

when detecting that the PDSCHs of a plurality of downlink component carriers include two codewords, the user equipment executing a logical AND operation among carriers on the acknowledgement message corresponding to each downlink component carrier to acquire the 2bit acknowledgement message b(0)b(1) that is bundled corresponding to the two codewords, and performing QPSK modulation for the 2bit acknowledgement message b(0)b(1), and then transmitting the 2bit acknowledgement message b(0)b(1) on the PUCCH whose channel resource index is $n_{PUCCH,i}$ in the uplink component carrier;

when detecting that the PDSCHs of a plurality of downlink component carriers include one codeword, the user equipment executing a logical AND operation among carriers on the acknowledgement message corresponding to each downlink component carrier to acquire a 1bit acknowledgement message b(0) that is bundled corresponding to the codeword, and performing BPSK modulation for the 1bit acknowledgement message b(0), and then transmitting the 1 bit acknowledgement message b(0) on the PUCCH whose channel resource index is $n_{PUCCH,i}$ in the uplink component carrier.

A higher layer configures that the user equipment uses a bundling mode to feed back the acknowledgement message.

The present invention provides a set of the complete scheme for determining the ACK/NACK channel resource, which is applied in a system using the carrier aggregation technique and implements to transmit the ACK/NACK message in the PUCCH.

Brief Description of Drawings

FIG. 1 is a structural schematic diagram of the physical uplink control channel in the time and frequency domain;

FIG. 2 is a structural schematic diagram of the physical uplink control channel format 1;

FIG. 3 is a schematic diagram of the uplink control channel resource allocation according to the present invention;

FIG. 4 is a schematic diagram of the uplink control channel resource allocation according to a specific embodiment;

FIG. 5 is a schematic diagram of forming the ACK/NACK bit in the bundling mode in accordance with a specific embodiment;

FIG. 6 is a schematic diagram of forming the ACK/NACK bit in the multiplexing mode in accordance with a specific embodiment.

Preferred Embodiments of the Present Invention

The present invention intends to provide a method for determining multiple ACK/NACK channel resources indexes, thereby completing the procedure to transmit multiple ACK/NACK messages on PUCCH.

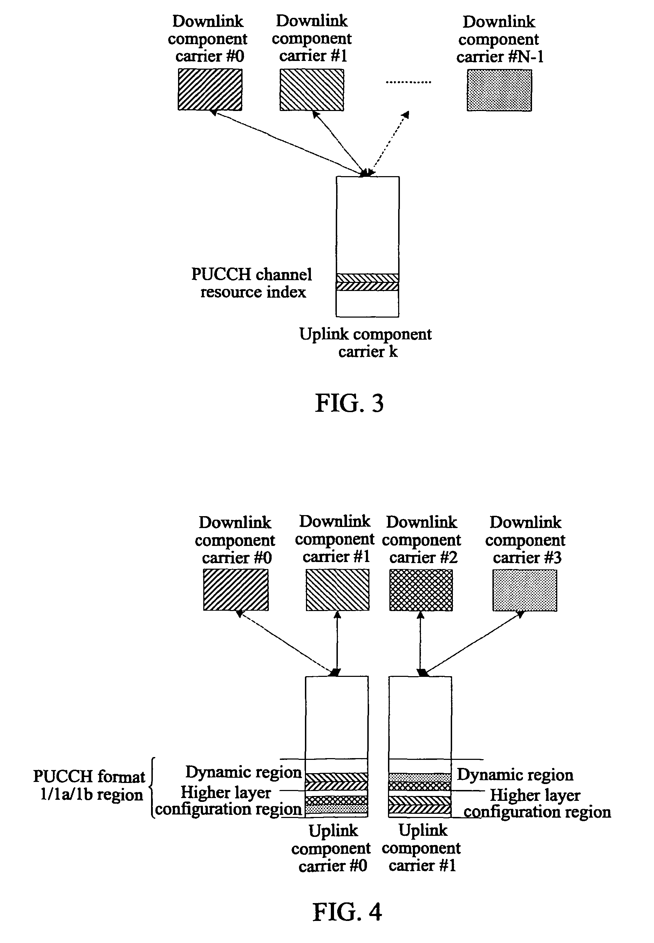

As shown in FIG. 3, it is assumed that the base station has the PDSCH scheduled to a certain UE in all the N downlink component carriers (the carrier numbers are from 0 to N-1) at a certain moment, and the UE feeds back these multiple ACK/NACK messages on the PUCCH channel resource index of the uplink component carrier k specified for the UE.

Below four embodiments will be used to describe the method of the present invention.

Embodiment 1

In the embodiment 1, the user equipment uses the NxPUCCH mode to transmit the acknowledgement message, and the higher layer signaling configures the feedback mode for the user equipment transmitting the acknowledgement message in multiple physical uplink control channels of the uplink component carrier.

In the case that the user equipment transmits the acknowledgement message in multiple PUCCHs of the uplink component carrier k (namely the NxPUCCH mode), the user equipment performs PDSCH demodulation on the N downlink component carriers for the user equipment to acquire N acknowledgement messages corresponding to the N downlink component carriers, and HARQ_ACK(i) denotes the acknowledgement message corresponding to the ith downlink component carrier; the method for determining the channel resource index for transmitting the acknowledgement messages comprises:

demodulating the PDSCH in accordance with the PDCCH corresponding to the PDSCH of the downlink component carrier i, and when the downlink component carrier j where the PDCCH is located and the uplink component carrier k are a matched carrier pair, the user equipment determining the channel resource index $n_{PUCCH,i}$ of the PUCCH where the acknowledgement message corresponding to the downlink component carrier i is located in the uplink component carrier k according to the mapping relationship between the index of the CCE of the PDCCH and the index of PUCCH;

demodulating the PDSCH in accordance with the PDCCH corresponding to the PDSCH of the downlink component carrier i, and when the downlink component carrier j where the PDSCH is located and the uplink component carrier k are not a matched carrier pair, the user equipment determining the channel resource index $n_{PUCCH,i}$ of the PUCCH where the acknowledgement message corresponding to the downlink component carrier i is located in the uplink component carrier k according to the higher layer signaling;

when the PDSCH of the downlink component carrier i does not have the corresponding PDCCH for demodulation, the user equipment determining the channel resource index $n_{PUCCH,i}$ of the PUCCH where the acknowledgement message corresponding to the downlink component carrier i is located in the uplink component carrier k according to the higher layer signaling; where, i and j are integers from 0 to N-1, and k is the uplink component carrier number and is an integer.

In this embodiment, the downlink component carrier j where the PDCCH corresponding to the PDSCH of the downlink component carrier i is located and the uplink component carrier k being a matched carrier pair refers that: the downlink component carrier j and the uplink component carrier k have the system default transmitting and receiving frequency spacing; or refers that the uplink carrier frequency in the system message of the downlink component carrier j is the same as the central frequency of the uplink component carrier k; and the matched relationship is cell-specific.

Specifically, the way for determining the channel resource index $n_{PUCCH,i}$ of the PUCCH where the acknowledgement message corresponding to the downlink component carrier i is located in the uplink component carrier k according to the mapping relationship between the index of the CCE of the PDCCH and the index of PUCCH is:

$$n_{PUCCH,i} = n_{CCE,j} + \sum_{p=0}^{j'-1} N_{CCE,p} + N_{PUCCH,k}$$

where $n_{CCE,j}$ is the first index of the CCEs of the PDCCH in the downlink component carrier j;

$\sum_{p=0}^{j'-1} N_{CCE,p}$ is the total number of the CCEs of the PDCCH of the first j' downlink component carriers in the downlink component carrier set which is matched with the uplink component carrier k; j' is a number of the downlink component carrier j in the downlink component carrier set that is matched with the uplink component carrier k;

$N_{PUCCH,k}$ is a parameter related to the PUCCH and configured by the higher layer signaling for the uplink component carrier k.

When the PDSCH transmission of the downlink component carrier i includes two codewords, the *HARQ_ACK (i)* denotes 2bit information, and the user equipment performs the QPSK modulation on the *HARQ_ACK(i)* and then transmits the *HARQ_ACK(i)* on the PUCCH whose channel resource index is $n_{PUCCH,i}$ in the uplink component carrier k; when the PDSCH transmission of the downlink component carrier i only includes one codeword, the *HARQ_ACK(i)* denotes 1bit information, and the user equipment performs the BPSK modulation on the *HARQ_ACK(i)* and then transmits the *HARQ_ACK(i)* on the PUCCH whose channel resource index is $n_{PUCCH,i}$ in the uplink component carrier k;

Embodiment 2

In the embodiment 2, the user equipment uses the bundling mode to transmit acknowledgement messages, and the higher layer signaling configures that the user equipment uses the bundling mode to feed back the acknowledgement messages.

In the case that the user equipment uses the bundling mode to transmit multiple acknowledgement messages in one physical uplink control channel of the uplink component carrier k, the user equipment performs the PDSCH demodulation on the N downlink component carriers for the user equipment, and then executes the logical AND operation on the N downlink component carriers to acquire 1bit acknowledgement message b(0) or 2bit acknowledgement message b(0)b(1); and the method for determining the channel resource index for transmitting the acknowledgement message comprises:

when demodulating the PDSCH in accordance with the PDCCH corresponding to the PDSCH of the downlink component carrier i, the user equipment determining the channel resource index $n_{PUCCH,i}$ of the PUCCH where the b(0) or b(0)b(1) are transmitted in the uplink component carrier k according to the mapping relationship between the index of the CCE of the PDCCH and the index of PUCCH;

when the PDSCH of the downlink component carrier i does not have corresponding PDCCH for demodulation, the user equipment determining the channel resource index $n_{PUCCH,i}$ of the PUCCH where b(0) or b(0)b(1) are transmitted in the uplink component carrier k according to the higher layer signaling, and k is the uplink component carrier number and is an integer;

wherein i is the carrier number index corresponding to the downlink component carrier which is matched with the uplink component carrier k, or when there are a plurality of downlink component carriers matched with the uplink component carrier k, i is the index of the downlink component carrier which has the default transmitting and receiving frequency spacing with the uplink component carrier, and the matched relationship is cell-specific.

The downlink component carrier j where the PDCCH corresponding to the PDSCH of the downlink component carrier i is located and the uplink component carrier k being a matched carrier pair refers that: the downlink component carrier j and the uplink component carrier k have the system default transmitting and receiving frequency spacing or refers that the uplink carrier frequency in the system message of the downlink component carrier j is the same as the central frequency of the uplink component carrier k.

Specifically, the way for determining the channel resource index $n_{PUCCH,i}$ of the PUCCH where the b(0) or b(0)b(1) are located in the uplink component carrier k according to the mapping relationship between the index of the CCE of the PDCCH and the index of PUCCH is:

$$n_{PUCCH,i} = n_{CCE,j} + \sum_{p=0}^{j'-1} N_{CCE,p} + N_{PUCCH,k}$$

where $n_{CCE,j}$ is the first index of the CCEs of the PDCCH in the downlink component carrier j;

$\sum_{p=0}^{j'-1} N_{CCE,p}$ is the total number of the CCEs of the PDCCH of the first j' downlink component carriers in the downlink component carrier set which is matched with the uplink component carrier k; j' is a number of the downlink component carrier j in the downlink component carrier set that is matched with the uplink component carrier k;

$N_{PUCCH,k}$ is a parameter related to the PUCCH and configured by the higher layer signaling for the uplink component carrier k.

When detecting that the PDSCH of a plurality of downlink component carriers includes two codewords, the user equipment executes the logical AND operation among carriers on the acknowledgement message corresponding to each downlink component carrier to acquire the 2bit bundled acknowledgement message b(0)b(1) corresponding to the two codewords, and performs QPSK modulation for the 2bit acknowledgement message b(0)b(1), and then transmits the acknowledgement message b(0)b(1) in the PUCCH whose channel resource index is $n_{PUCCH,i}$ in the uplink component carrier; when detecting that the PUSCH of a plurality of downlink component carriers only includes one codeword, the user equipment executes the logical AND operation among carriers on the acknowledgement message corresponding to each downlink component carrier to acquire the 1bit bundled acknowledgement message b(0) corresponding to the codeword, and performs the BPSK modulation on the 1bit acknowledgement message b(0), and then transmits the acknowledgement message b(0) on the PUCCH whose channel resource index is $n_{PUCCH,i}$ in the uplink component carrier.

Embodiment 3

The embodiment 3 is another embodiment of the user equipment using the bundling mode to transmit the acknowledgement message, and the higher layer configures that the user equipment uses the bundling mode to feed back the acknowledgement message.

In the case that the user equipment uses the bundling mode to transmit the acknowledgement message in one physical uplink control channel of the uplink component carrier k, the user equipment performs the PDSCH demodulation on the N downlink component carriers for the user equipment, and then executes the logical AND operation on the N downlink component carriers to acquire 1bit acknowledgement message b(0) or 2bit acknowledgement message b(0) b(1); and the method for determining the channel resource index for transmitting the acknowledgement message comprises:

demodulating the PDSCH in accordance with the PDCCH corresponding to the PDSCH of the downlink component carrier i, and when the downlink component carrier j where the PDCCH is located and the uplink component carrier k are a matched carrier pair, the user equipment determining the channel resource index $n_{PUCCH,i}$ of the PUCCH where the b(0) or b(0)b(1) are transmitted in the uplink component carrier according to the mapping relationship between the index of the CCE of the PDCCH and the index of PUCCH;

demodulating the PDSCH in accordance with the PDCCH corresponding to the PDSCH of the downlink component carrier i, and when the downlink component carrier j where the PDCCH is located and the uplink component carrier k are not a matched carrier pair, the user equipment determining the channel resource index $n_{PUCCH,i}$ of the PUCCH where the b(0) or b(0)b(1) are transmitted in the uplink component carrier k according to the higher layer signaling;

when the PDSCH of the downlink component carrier i does not have the corresponding PDCCH for demodulation, the user equipment determining the channel resource index $n_{PUCCH,i}$ of the PUCCH where the b(0) or b(0)b(1) are transmitted in the uplink component carrier k according to the higher layer signaling, wherein i and j are integers from 0 to N-1, and k is the uplink component carrier number and is an integer.

i is the carrier number index corresponding to the last downlink component carrier detected by the user equipment; the downlink component carriers are numbered with a certain order, and during downlink scheduling, the physical downlink shared channel scheduling is performed in the corresponding carrier in sequence according to this order, and the user equipment performs demodulation also according to this order.

Specifically, the downlink component carrier j where the PDCCH corresponding to the PDSCH of the downlink component carrier i is located and the uplink component carrier k being a matched carrier pair refers that: the downlink component carrier j and the uplink component carrier k have the system default transmitting and receiving frequency spacing; or refers that the uplink carrier frequency in the system message of the downlink component carrier j is the same as the central frequency of the uplink component carrier k; and the matched relationship is specified for the cell.

The way for determining the channel resource index $n_{PUCCH,i}$ of the PUCCH where the b(0) or b(0)b(1) are transmitted in the uplink component carrier k according to the mapping relationship between the index of the CCE of the PDCCH and the index of PUCCH is:

$$n_{PUCCH,i} = n_{CCE,j} + \sum_{p=0}^{j'-1} N_{CCE,p} + N_{PUCCH,k}$$

$n_{CCE,j}$ is the first index of the CCEs of the PDCCH in the downlink component carrier j;

$\sum_{p=0}^{j'-1} N_{CCE,p}$ is the total number of the CCEs of the PDCCH of the first j' downlink component carriers in the downlink component carrier set which is matched with the uplink component carrier k; j' is a number of the downlink component carrier j in the downlink component carrier set that is matched with the uplink component carrier k;

$N_{PUCCH,k}$ is a parameter related to the PUCCH and configured by the higher layer signaling for the uplink component carrier k.

When detecting that the PDSCH of a plurality of downlink component carriers includes two codewords, the user equipment executes the logical AND operation among carriers on the acknowledgement message corresponding to each downlink component carrier to acquire the 2bit bundled acknowledgement message b(0)b(1) corresponding to the two codewords, and performs QPSK modulation for the 2bit acknowledgement message b(0)b(1), and then transmits the acknowledgement message b(0)b(1) on the PUCCH whose channel resource index is $n_{PUCCH,i}$ in the uplink component carrier; when detecting that the PUSCH of a plurality of downlink component carriers only includes one codeword, the user equipment executes the logical AND operation among carriers on the acknowledgement message corresponding to each downlink component carrier to acquire the 1bit bundled acknowledgement message b(0) corresponding to the codeword, and performs the BPSK modulation for the 1bit acknowledgement message b(0), and then transmits the acknowledgement message b(0) on the PUCCH whose channel resource index is $n_{PUCCH,i}$ in the uplink component carrier.

Embodiment 4

In the embodiment 4, the user equipment uses the multiplexing mode to transmit the acknowledgement message, and the way that the user equipment uses different physical uplink control channels and different modulation symbols in the physical uplink control channels to represent the feedback states of downlink component carriers is configured by the higher layer.

The user equipment uses different PUCCHs and different modulated symbols in the PUCCH to represent the feedback states of the downlink component carriers, and the base station configures a downlink component carrier set for the user equipment via the higher layer signaling, and the downlink component carrier set includes N downlink component carriers. The user equipment performs PDSCH demodulation on the N downlink component carriers for the user equipment to acquire N acknowledgement messages corresponding to the N downlink component carriers, and HARQ_ACK(i) denotes the acknowledgement message corresponding to the $i^{th}$ downlink component carrier; if the user equipment does not detect the PDSCH in the downlink component carrier, it determines that the acknowledgement message corresponding to the downlink component carrier is set as a negative acknowledgement message; the method for determining the channel resource index for transmitting the acknowledgement messages comprises:

demodulating the PDSCH in accordance with the PDCCH corresponding to the PDSCH of the downlink component carrier i, and when the downlink component carrier j where the PDCCH is located and the uplink component carrier k are a matched carrier pair, the user equipment determining the channel resource index $n_{PUCCH,i}$ of the PUCCH in the uplink component carrier k and corresponding to the downlink component carrier i according to the mapping relationship between the index of the control channel element of the PDCCH and the index of PUCCH;

demodulating the PDSCH in accordance with the PDCCH corresponding to the PDSCH of the downlink component carrier i, and when the downlink component carrier j where the PDCCH is located and the uplink component carrier k are not a matched carrier pair, the user equipment determining the channel resource index $n_{PUCCH,i}$ of the PUCCH in the uplink component carrier k and corresponding to the downlink component carrier i according to the higher layer signaling;

when the PDSCH of the downlink component carrier i does not have the corresponding PDCCH for demodulation, the user equipment determining the channel resource index $n_{PUCCH,i}$ of the PUCCH in the uplink component carrier k and corresponding to the downlink component carrier i according to the higher layer signaling; where i and j are integers from 0 to N-1, and k is the uplink component carrier number and is an integer.

The downlink component carrier j where the PDCCH corresponding to the PDSCH of the downlink component carrier i is located and the uplink component carrier k being a matched carrier pair refers that: the downlink component carrier j and the uplink component carrier k have the system default transmitting and receiving frequency spacing, or refers that refers that the uplink carrier frequency in the system message of the downlink component carrier j is the same as the central frequency of the uplink component carrier k; and the matching relationship is cell-specific.

Specifically, the way for determining the channel resource index $n_{PUCCH,i}$ of the PUCCH in the uplink component carrier k and corresponding to the downlink component carrier i according to the mapping relationship between the index of the CCE of the PDCCH and the index of PUCCH is:

$$n_{PUCCH,i} = n_{CCE,j} + \sum_{p=0}^{j'-1} N_{CCE,p} + N_{PUCCH,k}$$

$n_{CCE,j}$ is the first index of the CCEs of the PDCCH in the downlink component carrier j;

$\sum_{p=0}^{j'-1} N_{CCE,p}$ is the total number of the CCEs of the PDCCH of the first j' downlink component carriers in the downlink component carrier set which is matched with the uplink component carrier k; j' is a number of the downlink component carrier j in the downlink component carrier set that is matched with the uplink component carrier k;

$N_{PUCCH,k}$ is a parameter related to the PUCCH and configured by the higher layer signaling for the uplink component carrier k.

When the PDSCH transmission of the downlink component carrier i includes two codewords, the *HARQ_ACK (i)* denotes the 1bit acknowledgement message *HARQ_ACK(i)* acquired after executing the logical AND operation across the two codewords; when the physical downlink shared channel transmission of the downlink component carrier i includes one codeword, the *HARQ_ACK(i)* denotes the 1bit acknowledgement message of the codeword.

The user equipment selects one from the N available PUCCHs from $n_{PUCCH,0}$ to $n_{PUCCH,N-1}$ to transmit the 2 bit information c(0)c(1) according to the combination of the states of the N acknowledgement messages from *HARQ_ ACK(0)* to *HARQ_ACK(N-1).*

The combination of the states of N acknowledgement messages from *HARQ_ACK*(0) to *HARQ_ACK(N-1)* and the selected physical uplink control channel as well as the transmitted 2bit information c(0)c(1) comply with the mapping relationship appointed by the base station and the user equipment, and the mapping relationship is related to the number N of downlink component carriers included in the downlink component carrier set configured to the user equipment.

The contents present invention will be further illustrated with reference to specific embodiments in the following.

FIG. 4 is a schematic diagram of the uplink control channel resource allocation according to the present invention. In this diagram, it is assumed that there are four downlink component carriers (#0, #1, #2, #3) and two uplink component carriers (#0, #1).

The uplink component carrier #0 and the downlink component carriers #0 and #1 are matched carrier pairs, and the uplink component carrier #0 and the downlink component carrier #1 have the default transmitting and receiving frequency spacing.

The uplink component carrier #1 and the downlink component carriers #2 and #3 are matched carrier pairs, and the uplink component carrier #1 and the downlink component carrier #2 have the default transmitting and receiving frequency spacing.

The aforementioned matched relationship is cell-specific.

Therefore, in the PUCCH format 1/1a/1b resource region of the uplink component carrier #0, the ACK/NACK channel resources for the downlink component carriers #0 and #1 are reserved in the dynamic region, and the ACK/NACK channel resources for the downlink component carriers #2 and #3 are reserved in the higher layer configuration region; similarly, in the PUCCH format 1/1a/1b resource region of the uplink component carrier #1, the ACK/NACK channel resources for the downlink component carriers # 2 and # 3 are reserved in the dynamic region, and the ACK/NACK channel resources for the downlink component carriers # 0 and # 1 are reserved in the higher layer configuration region.

In the following, the method for determining uplink control channel resources of the present invention as well as the corresponding ACK/NACK transmission will be illustrated in detail with reference to the specific ACK/NACK feedback mode.

Specific embodiment 1 (corresponding to the embodiment 1)

It is assumed that the uplink and downlink carrier configuration of the system are shown in FIG. 4, there are four downlink component carriers and 2 uplink component carriers, the base station configures that the UE uses the NxPUCCH mode to perform feedback of the ACK/NACK by the higher layer signaling, and the base station configures the UE to perform feedback of the ACK/NACK in the uplink component carrier #0. It is also assumed that the base station has the PDSCHs scheduled to the UE in all of the downlink component carriers #0, #1 and #2 respectively in a certain moment. In order to facilitate the description, it is also assumed that each of the PDSCH transmission has a corresponding PDCCH, that is, the downlink component carrier j where the PDCCH is located is the downlink component carrier i.

The UE respectively demodulates the PDSCHs of the downlink component carriers #0, #1 and #2 to acquire the corresponding ACK/NACK messages $HARQ\_ACK(i)$, $i$=0,1,2. When the UE needs to perform feedback of these three ACK/NACK messages on three PUCCHs:

(1) for the ACK/NACK message $HARQ\_ACK(0)$ of the downlink component carrier #0, since the downlink component carrier #0 and the uplink component carrier #0 are a matched carrier pair, the corresponding ACK/NACK channel resource index $n_{PUCCH,0}$ can be acquired based on the following way:

$$n_{PUCCH,0} = n_{CCE,0} + \sum_{p=0}^{0-1} N_{CCE,p} + N_{PUCCH,0}^{(1)} = n_{CCE,0} + N_{PUCCH,0}^{(1)}$$

where $n_{CCE,0}$ is the first index of the CCEs of the PDCCH in the downlink component carrier #0;
since the downlink component carrier #0 is the first carrier in the carrier set that is matched with the uplink component carrier #0, therefore $\sum_{p=0}^{0-1} N_{CCE,p} = 0;$

$N_{PUCCH,0}$ is a parameter configured by the higher layer signaling for the uplink component carrier #0.

(2) for the ACK/NACK message $HARQ\_ACK(1)$ of the downlink component carrier #1, since the downlink component carrier #1 and the uplink components carrier #0 are also a matched carrier pair, the corresponding ACK/NACK channel resource index $n_{PUCCH,1}$ can be acquired based on the following way:

$$n_{PUCCH,1} = n_{CCE,1} + \sum_{p=0}^{1-1} N_{CCE,p} + N_{PUCCH,0} = n_{CCE,1} + N_{CCE,0} + N_{PUCCH,0}$$

where $n_{CCE,1}$ is the first index of the CCEs of the PDCCH in the downlink component carrier #1;
$N_{CCE,0}$ is the total number of CCEs of the physical downlink control channel of the downlink component carrier #0;

$N_{PUCCH,0}^{(1)}$ is a parameter configured by the higher layer signaling for the uplink component carrier #0.

(3) for the ACK/NACK message $HARQ\_ACK(2)$ of the downlink component carrier #2, since the downlink component carrier #2 and the uplink component carrier #0 are not a matched carrier pair, the corresponding ACK/NACK channel resource index $n_{PUCCH,2}^{(1)}$ can be determined according to the higher layer signaling.

Finally, when the PDSCH transmission of the downlink component carrier i (i=0,1,2) includes two codewords, $HARQ\_ACK(i)$ denotes 2bit information, and the QPSK modulation is performed for the HARQ_ACK(i) and then the HARQ_ACK(i) is transmitted on the PUCCH whose ACK/NACK channel index is $n_{PUCCH,i}$; when the PDSCH transmission of the downlink component carrier i has only one codeword, $HARQ\_ACK(i)$ denotes 1bit information, and the BPSK modulation is performed for the HARQ_ACK(i) and then the HARQ_ACK(i) is transmitted on the PUCCH whose channel index is $n_{PUCCH,i}$.

Specific embodiment 2 (corresponding to the embodiment 2)

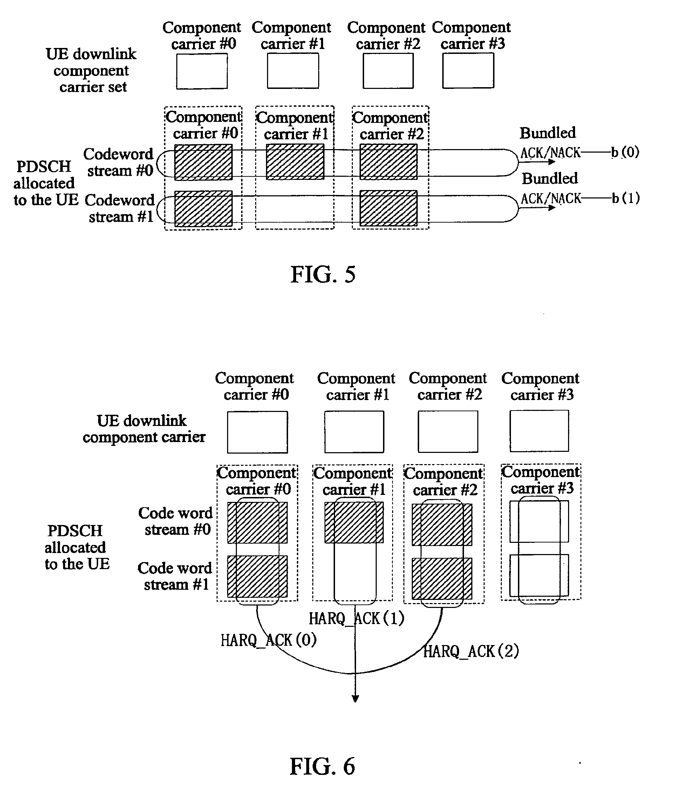

It is assumed that the uplink and downlink carrier configuration conditions of the system are shown in FIG. 4, there are four downlink component carriers and 2 uplink component carriers, the base station configures that the UE uses the bundling mode when feeding back the ACK/NACK by the higher layer signaling, and the base station configures to the UE feedback the ACK/NACK in the uplink component carrier #0. It is also assumed that the base station has the PDSCHs scheduled to the UE in all of the downlink component carriers #0, #1 and #2 respectively in a certain moment. In order to facilitate the description, it is also assumed that each of the PDSCH transmission has a corresponding PDCCH, that is, the downlink component carrier j where the PDCCH is located is the downlink component carrier i.
The UE respectively demodulates the PDSCH of the downlink component carriers #0, #1 and #2 to acquire the corresponding ACK / NACK messages, and then uses the method shown in FIG. 5 to execute the logical AND operation among carriers on the ACK/NACK messages corresponding to each codewords to acquire 2bit information b (0)b(1).

Since the downlink component carrier #1 is the matched downlink carrier that has the default transmitting and receiving spacing with the uplink component carrier #0, the QPSK modulation is performed for the b(0)b(1) and then the b(0)b(1) is transmitted on the PUCCH whose channel index is $n_{PUCCH,1}$, and the $n_{PUCCH,1}$ is acquired based on the following way:

$$n_{PUCCH,1} = n_{CCE,1} + \sum_{p=0}^{1-1} N_{CCE,p} + N_{PUCCH,0} = n_{CCE,1} + N_{CCE,0} + N_{PUCCH,0}$$

where $n_{CCE,1}$ is the first index of the CCEs of the PDCCH in the downlink component carrier #1;

$N_{CCE,0}$ is the total number of CCEs of the downlink component channel # 0;

$N_{PUCCH,0}^{(1)}$ is a parameter configured by the higher layer signaling for the uplink component carrier #0.

Specific embodiment 3 (corresponding to the embodiment 3)

It is assumed that the uplink and downlink carrier configuration conditions of the system are shown in FIG. 4, there are four downlink component carriers and 2 uplink component carriers, the base station configures that the UE uses the bundling mode when feeding back the ACK/NACK by the higher layer signaling, and the base station configures the UE to feedback the ACK/NACK in the uplink component carrier #0. It is also assumed that the base station has the PDSCHs scheduled to the UE in all of the downlink component carriers #0, #1 and #2 respectively in a certain moment. In order to facilitate the description, it is also assumed that each of the PDSCH transmission has a corresponding PDCCH, that is, the downlink component carrier j where the PDCCH is located is the downlink component carrier i.

The UE respectively demodulates the PDSCH of the downlink component carriers #0, #1 and #2 to acquire the corresponding ACK/NACK messages, and then uses the method shown in FIG. 5 to execute the logical AND operation among carriers on the ACK/NACK message corresponding to each codewords to acquire 2bit information b(0)b(1).

It is assumed that the UE performs the detection based on the order of the downlink component carriers #0, #1 and #2 when demodulating the PDSCH, therefore, the downlink component carrier #2 is the last downlink component carrier detected by the UE, QPSK modulation is performed on the b(0)b(1), and then the b(0)b(1) is transmitted in the PUCCH whose channel index is $n_{PUCCH,2}$, and since the downlink component carrier #2 and the uplink component carrier #0 are not a matched carrier pair, the $n_{PUCCH,2}$ is determined according to the higher layer signaling.

Specific embodiment 4 (corresponding to the embodiment 4)

It is assumed that the uplink and downlink carrier configuration conditions of the system are shown in FIG. 4, there are 4 downlink component carriers and 2 uplink component carriers, the base station configures that the UE uses the multiplexing mode when feeding back the ACK/NACK by the higher layer signaling, and the base station configures the UE to feedback the ACK/NACK in the uplink component carrier #0 (herein, the uplink component carrier #0 is the uplink component carrier #k mentioned in the above description). The base station configures a downlink component carrier set S={DL CC#0, DL CC#1, DL CC#2} for the UE, and the downlink component carriers in the downlink component carrier set are included in the aforementioned four downlink component carriers. It is also assumed that the base station has the PDSCHs scheduled to the UE in all of the downlink component carriers #0, #1 and #2 respectively in a certain moment. In order to facilitate the description, it is also assumed that each of the PDSCH transmission has a corresponding PDCCH, that is, the downlink component carrier j where the PDCCH is located is the downlink component carrier i.

The UE respectively demodulates the PDSCH of the downlink component carriers #0, #1 and #2 to acquire the corresponding ACK/NACK messages, and then uses the method shown in FIG. 6 to execute the logical AND operation across the two codeword on the ACK/NACK message corresponding to each carrier to acquire the corresponding ACK/ NACK message $HARQ\_ACK(i)$,i=0, 1, ..., 2, and it is assumed that the $n_{PUCCH,i}$, i=0,1,2 is the ACK/NACK channel resource index acquired according to the downlink component carrier i, and then:

(1) for the ACK/NACK channel resource index $n_{PUCCH,0}$ corresponding to the downlink component carrier #0, since the downlink component carrier #0 and the uplink component carrier #0 are a matched carrier pair, the $n_{PUCCH,0}$ is acquired based on the following way:

$$n_{PUCCH,0} = n_{CCE,0} + \sum_{p=0}^{0-1} N_{CCE,p} + N_{PUCCH,0}^{(1)} = n_{CCE,0} + N_{PUCCH,0}^{(1)}$$

where $n_{CCE,0}$ is the first index of the CCEs of the PDCCH in the downlink component carrier #0;

since the downlink component carrier #0 is the first carrier in the carrier set that is matched with the uplink component carrier #0, $\sum_{p=0}^{0-1} N_{CCE,p} = 0$;

$N_{PUCCH,0}$ is a parameter configured by the higher layer signaling for the uplink carrier #0.

(2) for the ACK/NACK channel resource index $n_{PUCCH,1}$ of the downlink component carrier #1, since the downlink component carrier #1 and the uplink components carrier #0 are a matched carrier pair, the $n_{PUCCH,1}$ can be acquired based on the following way:

$$n_{PUCCH,1} = n_{CCE,1} + \sum_{p=0}^{1-1} N_{CCE,p} + N_{PUCCH,0} = n_{CCE,1} + N_{CCE,0} + N_{PUCCH,0}$$

where $n_{CCE,1}$ is the first index of the CCEs of the PDCCH in the downlink component carrier #1;

$N_{CCE,0}$ is the total number of CCEs of the downlink component channel # 0;

$N_{PUCCH,0}^{(1)}$ is a parameter configured by the higher layer signaling for the uplink component carrier # 0.

(3) for the ACK/NACK channel resource index $n_{PUCCH,2}$ of the downlink component carrier #2, since the downlink component carrier #2 and the uplink component carrier #0 are not a matched carrier pair, the $n_{PUCCH,2}$ can be determined according to the higher layer signaling.

The UE will select one $n_{PUCCH,s}$ channel from the three available ACK/NACK channels $n_{PUCCH,j}$, $n_{PUCCH,1}$,..., $n_{PUCCH,N-1}$ to transmit the 2bit information c(0)c(1) according to the combination of the states of the three acknowledgement messages $HARQ\_ACK(0)$, $HARQ\_ACK(1)$ and $HARQ\_ACK(2)$; wherein the combination of the states of the $HARQ\_ACK(0)$, $HARQ\_ACK(1)$ and $HARQ\_ACK(2)$ and the transmitted 2bit information c(0)c(1) have the mapping relationship appointed between the base station and the UE, for example, table 1 to table 4 show a specific example of the appointed mapping relationship.

Table 1 indicates the appointed mapping relationship between the combination of the states of the $HARQ\_ACK(0)$, ...,$HARQ\_ACK(N-1)$ and the transmitted 2 bit information c(0)c(1) when N is 5.

Table 1

| HARQ_ACK(0),HARQ_ACK(1),HARQ_ACK(2), HARQ ACK(3),HARQ ACK(4) | | | | | $n_{PUCCH}^{(1)}$ | c(0)c(1) |
|---|---|---|---|---|---|---|
| ACK | ACK | ACK | ACK | ACK | $n_{PUCCH,4}^{(1)}$ | 0,0 |
| ACK | ACK | ACK | ACK | NACK/DTX | $n_{PUCCH,0}^{(1)}$ | 1,1 |
| ACK | ACK | ACK | NACK/DTX | NACK/DTX | $n_{PUCCH,0}^{(1)}$ | 1,1 |
| ACK | ACK | ACK | NACK/DTX | ACK | $n_{PUCCH,1}^{(1)}$ | 1,1 |
| ACK | ACK | NACK/DTX | NACK/DTX | ACK | $n_{PUCCH,1}^{(1)}$ | 1,1 |
| NACK/DTX | ACK | ACK | ACK | ACK | $n_{PUCCH,2}^{(1)}$ | 1,1 |
| NACK/DTX | ACK | ACK | ACK | NACK/DTX | $n_{PUCCH,2}^{(1)}$ | 1,1 |

(continued)

| HARQ_ACK(0),HARQ_ACK(1),HARQ_ACK(2), HARQ ACK(3),HARQ ACK(4) | | | | | $n_{\mathrm{PUCCH}}^{(1)}$ | c(0)c(1) |
|---|---|---|---|---|---|---|
| ACK | NACK/DTX | ACK | ACK | ACK | $n_{\mathrm{PUCCH,3}}^{(1)}$ | 1,1 |
| NACK/DTX | NACK/DTX | ACK | ACK | ACK | $n_{\mathrm{PUCCH,3}}^{(1)}$ | 1,1 |
| ACK | ACK | NACK/DTX | ACK | ACK | $n_{\mathrm{PUCCH,4}}^{(1)}$ | 1,1 |
| ACK | NACK/DTX | NACK/DTX | ACK | ACK | $n_{\mathrm{PUCCH,4}}^{(1)}$ | 1,1 |
| ACK | ACK | NACK/DTX | ACK | NACK/DTX | $n_{\mathrm{PUCCH,0}}^{(1)}$ | 1,0 |
| ACK | NACK/DTX | NACK/DTX | ACK | NACK/DTX | $n_{\mathrm{PUCCH,0}}^{(1)}$ | 1,0 |
| NACK/DTX | ACK | ACK | NACK/DTX | ACK | $n_{\mathrm{PUCCH,1}}^{(1)}$ | 1,0 |
| NACK/DTX | ACK | NACK/DTX | NACK/DTX | ACK | $n_{\mathrm{PUCCH,1}}^{(1)}$ | 1,0 |
| ACK | NACK/DTX | ACK | ACK | NACK/DTX | $n_{\mathrm{PUCCH,2}}^{(1)}$ | 1,0 |
| ACK | NACK/DTX | ACK | NACK/DTX | NACK/DTX | $n_{\mathrm{PUCCH,2}}^{(1)}$ | 1,0 |
| NACK/DTX | ACK | NACK/DTX | ACK | ACK | $n_{\mathrm{PUCCH,3}}^{(1)}$ | 1,0 |
| NACK/DTX | ACK | NACK/DTX | ACK | NACK/DTX | $n_{\mathrm{PUCCH,3}}^{(1)}$ | 1,0 |
| NACK/DTX | ACK | ACK | NACK/DTX | ACK | $n_{\mathrm{PUCCH,4}}^{(1)}$ | 1,0 |
| NACK/DTX | ACK | NACK/DTX | NACK/DTX | ACK | $n_{\mathrm{PUCCH,4}}^{(1)}$ | 1,0 |
| ACK | NACK/DTX | NACK/DTX | NACKDTX | NACK/DTX | $n_{\mathrm{PUCCH,0}}^{(1)}$ | 0,1 |
| ACK | NACK/DTX | NACK/DTX | NACK/DTX | ACK | $n_{\mathrm{PUCCH,0}}^{(1)}$ | 0,1 |
| NACK/DTX | ACK | NACK/DTX | NACK/DTX | NACK/DTX | $n_{\mathrm{PUCCH,1}}^{(1)}$ | 0,1 |
| ACK | ACK | NACK/DTX | NACK/DTX | NACK/DTX | $n_{\mathrm{PUCCH,1}}^{(1)}$ | 0,1 |
| NACK/DTX | NACK/DTX | ACK | NACK/DTX | NACK/DTX | $n_{\mathrm{PUCCH,2}}^{(1)}$ | 0,1 |
| NACK/DTX | ACK | ACK | NACK/DTX | NACK/DTX | $n_{\mathrm{PUCCH,2}}^{(1)}$ | 0,1 |
| NACK/DTX | NACK/DTX | NACK/DTX | ACK | NACK/DTX | $n_{\mathrm{PUCCH,3}}^{(1)}$ | 0,1 |
| NACK/DTX | NACK/DTX | ACK | ACK | NACK/DTX | $n_{\mathrm{PUCCH,3}}^{(1)}$ | 0,1 |
| NACK/DTX | NACK/DTX | NACK/DTX | NACK/DTX | ACK | $n_{\mathrm{PUCCH,4}}^{(1)}$ | 0,1 |
| NACK/DTX | NACK/DTX | NACK/DTX | ACK | ACK | $n_{\mathrm{PUCCH,4}}^{(1)}$ | 0,1 |
| NACK | NACK/DTX | NACK/DTX | NACK/DTX | NACK/DTX | $n_{\mathrm{PUCCH,0}}^{(1)}$ | 0,0 |

(continued)

| HARQ_ACK(0),HARQ_ACK(1),HARQ_ACK(2), HARQ ACK(3),HARQ ACK(4) | | | | | $n_{PUCCH}^{(1)}$ | c(0)c(1) |
|---|---|---|---|---|---|---|
| DTX | NACK | NACKDTX | NACK/DTX | NACK/DTX | $n_{PUCCH,1}^{(1)}$ | 0,0 |
| DTX | DTX | NACK | NACK/DTX | NACK/DTX | $n_{PUCCH,2}^{(1)}$ | 0,0 |
| DTX | DTX | DTX | NACK | NACK/DTX | $n_{PUCCH,3}^{(1)}$ | 0,0 |
| DTX | DTX | DTX | DTX | NACK | N/A | N/A |
| DTX | DTX | DTX | DTX | DTX | N/A | N/A |

Table 2 indicates the appointed mapping relationship between the combination of the states of the *HARQ_ ACK*(0), *...,HARQ_ACK*(*N*-1) and the transmitted 2bit information c(0)c(1) when N is 4.

Table 2

| HARQ_ACK(0),HARQ_ACK(1),HARQ_ACK(2),HARQ_ACK(3), | | | | $n_{PUCCH}^{(1)}$ | c(0)c(1) |
|---|---|---|---|---|---|
| ACK | ACK | ACK | ACK | $n_{PUCCH,1}^{(1)}$ | 1,1 |
| ACK | ACK | ACK | NACK/DTX | $n_{PUCCH,1}^{(1)}$ | 1,0 |
| ACK | ACK | NACK/DTX | ACK | $n_{PUCCH,1}^{(1)}$ | 1,0 |
| ACK | NACK/DTX | ACK | ACK | $n_{PUCCH,3}^{(1)}$ | 0,1 |
| NACK/DTX | ACK | ACK | ACK | $n_{PUCCH,3}^{(1)}$ | 0,1 |
| ACK | ACK | NACK/DTX | NACK/DTX | $n_{PUCCH,1}^{(1)}$ | 0,1 |
| ACK | NACK/DTX | ACK | NACK/DTX | $n_{PUCCH,2}^{(1)}$ | 0,1 |
| ACK | NACK/DTX | NACK/DTX | ACK | $n_{PUCCH,0}^{(1)}$ | 0,1 |
| NACK/DTX | ACK | ACK | NACK/DTX | $n_{PUCCH,2}^{(1)}$ | 1,0 |
| NACK/DTX | ACK | NACK/DTX | ACK | $n_{PUCCH,3}^{(1)}$ | 1,0 |
| NACK/DTX | NACK/DTX | ACK | ACK | $n_{PUCCH,3}^{(1)}$ | 0,1 |
| ACK | NACK/DTX | NACK/DTX | NACK/DTX | $n_{PUCCH,0}^{(1)}$ | 1,1 |
| NACK/DTX | ACK | NACK/DTX | NACK/DTX | $n_{PUCCH,1}^{(1)}$ | 0,1 |
| NACK/DTX | NACK/DTX | ACK | NACK/DTX | $n_{PUCCH,2}^{(1)}$ | 0,0 |
| NACK/DTX | NACK/DTX | NACK/DTX | ACK | $n_{PUCCH,3}^{(1)}$ | 0,0 |
| NACK | DTX | DTX | DTX | $n_{PUCCH,0}^{(1)}$ | 1,0 |
| NACK/DTX | NACK | DTX | DTX | $n_{PUCCH,1}^{(1)}$ | 0,0 |

(continued)

| HARQ_ACK(0),HARQ_ACK(1),HARQ_ACK(2),HARQ_ACK(3), | | | | $n^{(1)}_{PUCCH}$ | c(0)c(1) |
|---|---|---|---|---|---|
| NACK/DTX | NACK/DTX | NACK | DTX | $n^{(1)}_{PUCCH,2}$ | 1,1 |
| NACK/DTX | NACK/DTX | NACK/DTX | NACK | $n^{(1)}_{PUCCH,3}$ | 1,1 |
| DTX | DTX | DTX | DTX | N/A | N/A |

Table 3 indicates the appointed mapping relationship between the combination of the states of the *HARQ_ ACK*(0), ...,*HARQ_ACK*(N-1) and the transmitted 2bit information c(0)c(1) when N is 3.

Table 3

| HARQ_ACK(0),HARQ_ACK(1),HARQ_ACK (2) | | | $n^{(1)}_{PUCCH}$ | c(0)c(1) |
|---|---|---|---|---|
| ACK | ACK | ACK | $n^{(1)}_{PUCCH,2}$ | 1,1 |
| ACK | ACK | NACK/DTX | $n^{(1)}_{PUCCH,1}$ | 1,1 |
| ACK | NACK/DTX | ACK | $n^{(1)}_{PUCCH,0}$ | 1,0 |
| NACK/DTX | ACK | ACK | $n^{(1)}_{PUCCH,2}$ | 1,0 |
| ACK | NACK/DTX | NACK/DTX | $n^{(1)}_{PUCCH,0}$ | 0,1 |
| NACK/DTX | ACK | NACK/DTX | $n^{(1)}_{PUCCH,1}$ | 0,0 |
| NACK/DTX | NACK/DTX | ACK | $n^{(1)}_{PUCCH,2}$ | 0,0 |
| NACK | NACK/DTX | NACK/DTX | $n^{(1)}_{PUCCH,0}$ | 1,0 |
| DTX | NACK | NACK/DTX | $n^{(1)}_{PUCCH,1}$ | 1,0 |
| DTX | DTX | NACK | $n^{(1)}_{PUCCH,2}$ | 0,1 |
| DTX | DTX | DTX | N/A | N/A |

Table 4 indicates the appointed mapping relationship between the combination of the states of the *HARQ_ ACK*(0), ...,*HARQ_ACK*(N-1) and the transmitted 2bit information c(0)c(1) when N is 2.

Table 4

| HARQ_ACK(0),HARQ_ACK(1) | | $n^{(1)}_{PUCCH}$ | c(0)c(1) |
|---|---|---|---|
| ACK | ACK | $n^{(1)}_{PUCCH,1}$ | 1,1 |
| ACK | NACK/DTX | $n^{(1)}_{PUCCH,0}$ | 0,1 |
| NACK/DTX | ACK | $n^{(1)}_{PUCCH,1}$ | 0,0 |

(continued)

| HARQ_ACK(0),HARQ_ACK(1) | | $n^{(1)}_{\text{PUCCH}}$ | c(0)c(1) |
|---|---|---|---|
| NACK | DTX | $n^{(1)}_{\text{PUCCH},0}$ | 1,0 |
| NACK/DTX | NACK | $n^{(1)}_{\text{PUCCH},1}$ | 1,0 |
| DTX | DTX | N/A | N/A |

It can be understood by those having ordinary skill in the field that parts or all steps in the abovementioned method can be fulfilled by instructing the relevant hardware components with a program, and said program can be stored in a computer readable storage media, such as a read only memory, a magnetic disk or an optical disk and so on. Optionally, parts or all steps in the abovementioned embodiments can also be implemented with one or more integrated circuits. Correspondingly, each module/unit in the abovementioned embodiment can be implemented in the form of hardware or in the form of software function module. The present invention is not limited any specific forms of the combination of the hardware and the software.

The above description is only preferred embodiments of the present invention rather than is used as restrictions of the present invention, and for those skilled in the field, the present invention can have various modifications and transformations. All such modifications, equivalent substitutions, and improvements etc. made within the spirit and essence of the present invention should fall into the protection scope of the present invention.

Industrial Applicability

The present invention provides a set of the complete scheme for determining the ACK/NACK channel resource, which is applied in a system using the carrier aggregation technique and implements to transmit the ACK/NACK message in the PUCCH.

**Claims**

1.   A method for determining a physical uplink control channel resource in a multi-carrier system, which comprises:

a user equipment using different Physical Uplink Control Channels (PUCCH) and different modulated symbols on the PUCCH to represent a feedback state of downlink component carriers, a base station configuring a downlink component carrier set for the user equipment through higher layer signaling, and the downlink component carrier set includes N downlink component carriers, and the user equipment performing Physical Downlink Shared Channel (PDSCH) demodulation on the N downlink component carriers carrying a PDSCH for the user equipment to acquire N acknowledgement messages corresponding to the N downlink component carriers, $H4RQ\_ACK(i)$ denoting the acknowledgement message corresponding to an $i^{th}$ downlink component carrier; if the user equipment does not detect the PDSCH in the downlink component carrier, determining that the acknowledgement message corresponding to the downlink component carrier is a negative acknowledgement message;

wherein a way for determining a channel resource index for transmitting the acknowledgement messages comprises:

demodulating the PDSCH in accordance with a Physical Downlink Control Channel (PDCCH) corresponding to the PDSCH of the downlink component carrier i, when a downlink component carrier j where the PDCCH is located and an uplink component carrier k are a matched carrier pair, the user equipment determining a channel resource index $n_{PUCCH,i}$ of the PUCCH in the uplink component carrier k and corresponding to the downlink component carrier i according to a mapping relationship between an index of a Control Channel Element (CCE) of the PDCCH and an index of PUCCH;

demodulating the PDSCH in accordance with the PDCCH corresponding to the PDSCH of the downlink component carrier i, and when the downlink component carrier j where the PDCCH is located and the uplink component carrier k are not a matched carrier pair, the user equipment determining the channel resource index $n_{PUCCH,i}$ of the PUCCH in the uplink component carrier k corresponding to the downlink component carrier i according to higher layer signaling;

when the PDSCH of the downlink component carrier i does not has a corresponding PDCCH for demodulation, the user equipment determining the channel resource index $n_{PUCCH,i}$ of the PUCCH in the uplink component carrier k corresponding to the downlink component carrier i according to higher layer signaling; where i and j are integers from 0 to N-1, and k is an uplink component carrier number and is an integer.

**2.** The method of claim 1, wherein:

the uplink component carrier k is an uplink component carrier for which the user equipment is using the PUCCH to transmit the modulated symbol.

**3.** The method of claim 1, wherein:

the downlink component carrier j and the uplink component carrier k being the matched carrier pair refers that: the downlink component carrier j and the uplink component carrier k have a system default transmitting and receiving frequency spacing, or refers that an uplink carrier frequency in a system message of the downlink component carrier j is same as a central frequency of the uplink component carrier k, and a matched relationship is cell-specific.

**4.** The method of claim 1, wherein:

a way for determining the channel resource index $n_{PUCCH,i}$ of the PUCCH in the uplink component carrier k and corresponding to the downlink component carrier i according to the mapping relationship between the index of the CCE of the PDCCH and the index of PUCCH is:

$$n_{PUCCH,i} = n_{CCE,j} + \sum_{p=0}^{j'-1} N_{CCE,p} + N_{PUCCH,k}$$

where

$n_{CCE,j}$ is a first index of the CCE of the PDCCH in the downlink component carrer j; $\sum_{p=0}^{j'-1} N_{CCE,p}$ is a total number of the CCEs of the PDCCHs of the first j' downlink component carriers in the downlink component carrier set which is matched with the uplink component carrier k; j' is a number of the downlink component carrier j in the downlink component carrier set that is matched with the uplink component carrier k;
$N_{PUCCH,k}$ is a parameter related to the PUCCH and configured by higher layer signaling for the uplink component carrier k.

**5.** The method of claim 1, which also comprises:

when PDSCH transmission of the downlink component carrier i includes two codewords, the *HARQ_ACK(i)* denoting the 1bit acknowledgement message after executing a logical AND operation across the two codewords ; when the PDSCH transmission of the downlink component carrier i includes one codeword, the *HARQ_ACK (i)* denoting the 1bit acknowledgement message of the codeword.

**6.** The method of claim 1, which also comprises:

the user equipment selecting one PUCCH from the N PUCCHs from $n_{PUCCH,0}$ to $n_{PUCCH,N-1}$ that are available to transmit the 2bit message c(0)c(1) according to a combination of the states of the N acknowledgement messages from *HARQ_ACK(0)* to *HARQ_ACK(N-1)*.

**7.** The method of claim 6, wherein:

the combination of the states of the N acknowledgement messages from HARQ_ACK(0) to HARQ-ACK(N-1) and the PUCCH that is selected as well as the 2bit message c(0)c(1) that is transmitted conform to a mapping relationship appointed between the base station and the user equipment, and the mapping relationship is related to a number N of downlink component carriers included in the downlink component carrier set configured to the user equipment.

**8.** The method of claim 1, wherein:

the way of the user equipment using different physical uplink control channels and different modulated symbols in the physical uplink control channels to represent the feedback state of the downlink component carrier is configured by higher layer signaling.

**9.** A method for determining a physical uplink control channel resource in a multi-carrier system, which comprises:

in a case that a user equipment transmits acknowledgement messages in a plurality of Physical Uplink Control Channels (PUCCHs) of an uplink component carrier k, the user equipment performing PDSCH demodulation on N downlink component carriers for the user equipment to acquire N acknowledgement messages corresponding to the N downlink component carriers, $HARQ\_ACK(i)$ denoting the acknowledgement message corresponding to an $i^{th}$ downlink component carrier;
wherein the way for determining a channel resource index for transmitting the acknowledgement message comprises:
demodulating the PDSCH in accordance with a Physical Downlink Control Channel (PDCCH) corresponding to the PDSCH of the downlink component carrier i, when a downlink component carrier j where the PDCCH is located and an uplink component carrier k are a matched carrier pair, the user equipment determining a channel resource index $n_{PUCCH,i}$ of the PUCCH where the acknowledgement message corresponding to the downlink component carrier i is located in the uplink component carrier k according to a mapping relationship between the index of a Control Channel Element (CCE) index of the PDCCH and an index of PUCCH;
demodulating the PDSCH in accordance with the PDCCH corresponding to the PDSCH of the downlink component carrier i, and when the downlink component carrier j where the PDCCH is located and the uplink component carrier k are not a matched carrier pair, the user equipment determining the channel resource index $n_{PUCCH,i}$ of the PUCCH where the acknowledgement message corresponding to the downlink component carrier i is located in the uplink component carrier k according to higher layer signaling;
when the PDSCH of the downlink component carrier i does not have a corresponding PDCCH for demodulation, the user equipment determining the channel resource index $n_{PUCCH,i}$ of the PUCCH where the acknowledgement message corresponding to the downlink component carrier i is located in the uplink component carrier k according to higher layer signaling;
where i and j are integers from 0 to N-1, and k is an uplink component carrier number and is an integer.

**10.** The method of claim 9, wherein:

the downlink component carrier j and the uplink component carrier k being the matched carrier pair refers that: the downlink component carrier j and the uplink component carrier k have a system default transmitting and receiving frequency spacing, or refers that an uplink carrier frequency in a system message of the downlink component carrier j is same as a central frequency of the uplink component carrier k, and a matched relationship is cell-specific.

**11.** The method of claim 9, wherein:

a way for determining the channel resource index $n_{PUCCH,i}$ of the PUCCH where the acknowledgement message corresponding to the downlink component carrier i is located in the uplink component carrier k according to the mapping relationship between the index of the CCE of the PDCCH and the index of PUCCH is:

$$n_{PUCCH,i} = n_{CCE,j} + \sum_{p=0}^{j'-1} N_{CCE,p} + N_{PUCCH,k}$$

where $n_{CCE,j}$ is a first index of the CCE of the PDCCH in the downlink component carrier j; $\sum_{p=0}^{j'-1} N_{CCE,p}$ is a total number of the CCEs of the PDCCHs of the first j' downlink component carriers in the downlink component carrier set which is matched with the uplink component carrier k; j' is a number of the downlink component carrier j in the downlink component carrier set that is matched with the uplink component carrier k; $N_{PUCCH,k}$ is a parameter related to the PUCCH and configured by higher layer signaling for the uplink component carrier k.

12. The method of claim 9, which also comprises: when PDSCH transmission of the downlink component carrier i includes two codewords, *HARQ_ACK(i)* denoting a 2bit message, and the user equipment performing QPSK modulation for the *HARQ_ACK(i)* and then transmitting the *HARQ_ACK(i)* on the PUCCH whose channel resource index is $n_{PUCCH,i}$ in the uplink component carrier k;

when the PDSCH transmission of the downlink component carrier i includes only one codeword, *HARQ_ACK(i)* denoting a 1bit message, and the user equipment performing BPSK modulation for the *HARQ_ACK(i)* and then transmitting the *HARQ_ACK(i)* on the PUCCH whose channel resource index is $n_{PUCCH,i}$ in the uplink component carrier k.

13. The method of claim 9, wherein:

a higher layer configures that the user equipment uses a feedback mode to transmit the acknowledgement message in a plurality of PUCCHs of the uplink component carrier.

14. A method for determining a physical uplink control channel resource in a multi-carrier system, which comprises:

in a case that a user equipment uses a bundling mode to transmit a plurality of acknowledgement messages in one Physical Uplink Control Channel (PUCCH) of an uplink component carrier k, the user equipment performing PDSCH demodulation on N downlink component carriers bearing a Physical Downlink Shared Channel (PDSCH) of the user equipment, and then executing a logical AND operation to acquire a 1bit acknowledgement message b(0) or a 2bit acknowledgement message b(0)b(1);

wherein a way for determining a channel resource index for transmitting the acknowledgement message comprises:

when demodulating the PDSCH in accordance with a Physical Downlink Control Channel (PDCCH) corresponding to the PDSCH of a downlink component carrier i, the user equipment determining a channel resource index $n_{PUCCH,i}$ of the PUCCH where the b(0) or b(0)b(1) is transmitted in the uplink component carrier k according to a mapping relationship between an index of a Control Channel Element (CCE) of the PDCCH and the index of PUCCH;

when the PDSCH of the downlink component carrier i does not have a corresponding PDCCH for demodulation, the user equipment determining the channel resource index $n_{PUCCH,i}$ of the PUCCH where the b(0) or b(0)b(1) is transmitted in the uplink component carrier k according to higher layer signaling, and k is an uplink component carrier number and is an integer.

15. The method of claim 14, wherein:

i is a carrier number index corresponding to the downlink component carrier which is matched with the uplink component carrier k, or there are a plurality of downlink component carriers matched with the uplink component carrier k, i is an index of the downlink component carriers which has a default transmitting and receiving frequency spacing with the uplink component carrier, and a matching relationship is cell-specific.

16. The method of claim 14, wherein:

the downlink component carrier j and the uplink component carrier k being the matched carrier pair refers that: the downlink component carrier j and the uplink component carrier k have a system default transmitting and receiving frequency spacing, or refers that an uplink carrier frequency in a system message of the downlink component carrier j is same as a central frequency of the uplink component carrier k.

17. The method of claim 14, wherein:

a way for determining the channel resource index $n_{PUCCH,i}$ of the PUCCH where the b(0) or b(0)b(1) is transmitted in the uplink component carrier k according to the mapping relationship between the index of the CCE of the PDCCH and the index of PUCCH is:

$$n_{PUCCH,i} = n_{CCE,j} + \sum_{p=0}^{j'-1} N_{CCE,p} + N_{PUCCH,k}$$

where $n_{CCE,j}$ is a first index of the CCE of the PDCCH in the downlink component carrier j;

$\sum_{p=0}^{j'-1} N_{CCE,p}$ is a total number of the CCEs of the PDCCHs of the first j' downlink component

carriers in the downlink component carrier set which is matched with the uplink component carrier k; j' is a number of the downlink component carrier j in the downlink component carrier set that is matched with the uplink component carrier k;

$N_{PUCCH,k}$ is a parameter related to the PUCCH and configured by higher layer signaling for the uplink component carrier k.

18. The method of claim 14, which also comprises:

when detecting that the PDSCHs of a plurality of downlink component carriers include two codewords, the user equipment executing a logical AND operation among carriers on the acknowledgement message corresponding to each downlink component carrier to acquire the 2bit acknowledgement message b(0)b(1) that is bundled corresponding to the two codewords, and performing QPSK modulation for the 2bit acknowledgement message b(0)b(1), and then transmitting the 2bit acknowledgement message b(0)b(1) on the PUCCH whose channel resource index is $n_{PUCCH,i}$ in the uplink component carrier;
when detecting that the PDSCHs of a plurality of downlink component carriers include one codeword, the user equipment executing a logical AND operation among carriers on the acknowledgement message corresponding to each downlink component carrier to acquire a 1bit acknowledgement message b(0) that is bundled corresponding to the codeword, and performing BPSK modulation on the 1bit acknowledgement message b(0), and then transmitting the 1 bit acknowledgement message b(0) in the PUCCH whose channel resource index is $n_{PUCCH,i}$ in the uplink component carrier.

19. The method of claim 14, wherein,
a higher layer configures that the user equipment uses a bundling mode to feed back the acknowledgement message.

20. A method for determining a physical uplink control channel resource in a multi-carrier system, which comprises:

in a case that a user equipment uses a bundling mode to transmit an acknowledgement message in one Physical Uplink Control Channel (PUCCH) of an uplink component carrier k, the user equipment performing PDSCH demodulation on N downlink component carriers bearing a Physical Downlink Shared Channel (PDSCH) of the user equipment, and then executing a logical AND operation to acquire a 1bit acknowledgement message b(0) or a 2bit acknowledgement message b(0)b(1);
wherein a way for determining a channel resource index for transmitting the acknowledgement message comprises:
demodulating the PDSCH in accordance with a Physical Downlink Control Channel (PDCCH) corresponding to the PDSCH of a downlink component carrier i, and when a downlink component carrier j where the PDCCH is located and the uplink component carrier k are a matched carrier pair, the user equipment determining a channel resource index $n_{PUCCH,i}$ of the PUCCH where the b(0) or b(0)b(1) is located in the uplink component carrier k according to a mapping relationship between an index of a Control Channel Element (CCE) of the PDCCH and an index of PUCCH;
demodulating the PDSCH in accordance with the PDCCH corresponding to the PDSCH of the downlink component carrier i, and when the downlink component carrier j where the PDCCH is located and the uplink component carrier k are not a matched carrier pair, the user equipment determining the channel resource index $n_{PUCCH,i}$ of the PUCCH where the b(0) or b(0)b(1) is located in the uplink component carrier k according to higher layer signaling;
when the PDSCH of the downlink component carrier i does not have a corresponding PDCCH for demodulation, the user equipment determining the channel resource index $n_{PUCCh,i}$ of the PUCCH where the b(0) or b(0)b(1) is located in the uplink component carrier k according to higher layer signaling; where i and j are integers from 0 to N-1, and k is an uplink component carrier number and is an integer.

**21.** The method of claim 20, wherein:

i is a carrier number index corresponding to a last downlink component carrier detected by the user equipment; the downlink component carriers are numbered with a certain order, and when performing downlink scheduling, the physical downlink shared channel scheduling is performed on a corresponding carrier according to this order, and the user equipment performs demodulation also according to this order.

**22.** The method of claim 20, wherein:

the downlink component carrier j where the PDCCH corresponding to the PDSCH of the downlink component carrier I and the uplink component carrier k being the matched carrier pair refers that: the downlink component carrier j and the uplink component carrier k have a system default transmitting and receiving frequency spacing, or refers that an uplink carrier frequency in a system message of the downlink component carrier j directs a central frequency of the uplink component carrier k, and a matched relationship is specified for a cell.

**23.** The method of claim 20, wherein:

a way for determining the channel resource index $n_{PUCCH,i}$ of PUCCH where the b(0) or b(0)b(1) is located in the uplink component carrier k according to the mapping relationship between the index of the CCE of the PDCCH and the index of PUCCH is:

$$n_{PUCCH,i} = n_{CCE,j} + \sum_{p=0}^{j'-1} N_{CCE,p} + N_{PUCCH,k}$$

where $n_{CCE,j}$ is a first index of the CCE of the PDCCH in the downlink component carrier j;

$\sum_{p=0}^{j'-1} N_{CCE,p}$ is a total of the CCEs of the PDCCHs of the first j' downlink component carriers in the downlink component carrier set which is matched with the uplink component carrier k; j' is a number of the downlink component carrier j in the downlink component carrier set that is matched with the uplink component carrier k; $N_{PUCCH,k}$ is a parameter related to the PUCCH and configured by higher layer signaling for the uplink component carrier k.

**24.** The method of claim 20, which also comprises:

when detecting that the PDSCHs of a plurality of downlink component carriers include two codewords, the user equipment executing a logical AND operation among carriers on the acknowledgement message corresponding to each downlink component carrier to acquire the 2bit acknowledgement message b(0)b(1) that is bundled corresponding to the two codewords, and performing QPSK modulation for the 2bit acknowledgement message b(0)b(1), and then transmitting the 2bit acknowledgement message b(0)b(1) on the PUCCH whose channel resource index is $n_{PUCCH,i}$ in the uplink component carrier;
when detecting that the PDSCHs of a plurality of downlink component carriers include one codeword, the user equipment executing a logical AND operation among carriers on the acknowledgement message corresponding to each downlink component carrier to acquire a 1bit acknowledgement message b(0) that is bundled corresponding to the codeword, and performing BPSK modulation on the 1bit acknowledgement message b(0), and then transmitting the 1 bit acknowledgement message b(0) in the PUCCH whose channel resource index is $n_{PUCCH,i}$ in the uplink component carrier.

**25.** The method of claim 20, wherein:

a higher layer configures that the user equipment uses a bundling mode to feed back the acknowledgement message.

| 1RB | PUCCH#1 | PUCCH#0 |
|---|---|---|
| 1RB | PUCCH#3 | PUCCH#2 |
| | ⋮ | ⋮ |
| | PUCCH #2 | PUCCH #3 |
| | PUCCH #0 | PUCCH #1 |

One slot (0.5ms)

One subframe (1ms)

FIG. 1

Time domain

Time domain DFT (Covering)

Frequency domain

Frequency domain CAZAC spectrum spread

Time domain Walsh covering

⋮

0.5ms

1ms

FIG. 2

Downlink
component
carrier #0

Downlink
component
carrier #1

Downlink
component
carrier #N-1

PUCCH channel
resource index

Uplink component
carrier k

## FIG. 3

Downlink
component
carrier #0

Downlink
component
carrier #1

Downlink
component
carrier #2

Downlink
component
carrier #3

PUCCH format
1/1a/1b region

Dynamic region

Higher layer
configuration region

Dynamic region

Higher layer
configuration region

Uplink
component
carrier #0

Uplink
component
carrier #1

## FIG. 4

Component carrier #0　　Component carrier #1　　Component carrier #2　　Component carrier #3

UE downlink component carrier set

Component carrier #0　　Component carrier #1　　Component carrier #2

Bundled ACK/NACK——b(0)

Bundled ACK/NACK——b(1)

PDSCH allocated to the UE

Codeword stream #0

Codeword stream #1

## FIG. 5

Component carrier #0　　Component carrier #1　　Component carrier #2　　Component carrier #3

UE downlink component carrier

Component carrier #0　　Component carrier #1　　Component carrier #2　　Component carrier #3

PDSCH allocated to the UE

Code word stream #0

Code word stream #1

HARQ_ACK(1)

HARQ_ACK(0)

HARQ_ACK(2)

## FIG. 6

# INTERNATIONAL SEARCH REPORT

| | |
|---|---|
| International application No. | |
| | PCT/CN2010/077078 |

**A.   CLASSIFICATION OF SUBJECT MATTER**

H04L1/00 (2006.01) i

According to International Patent Classification (IPC) or to both national classification and IPC

**B.    FIELDS SEARCHED**

Minimum documentation searched (classification system followed by classification symbols)

IPC: H04L, H04W

Documentation searched other than minimum documentation to the extent that such documents are included in the fields searched

Electronic data base consulted during the international search (name of data base and, where practicable, search terms used)

CNTXT，CPRSABS, CNKI, WPI, EPODOC, NPL,IEEE: uplink downlink physical control share channel resource component carrier response

**C.   DOCUMENTS CONSIDERED TO BE RELEVANT**

| Category* | Citation of document, with indication, where appropriate, of the relevant passages | Relevant to claim No. |
|---|---|---|
| P,X | CN101795492A（ZTE CORP）04 Aug. 2010（04.08.2010）the whole document | 1-25 |
| A | CN101222291A（ZTE CORP）16 Jul. 2008（16.07.2008）the whole document | 1-25 |
| A | CN101594211A（ZTE CORP）02 Dec. 2009（02.12.2009）the whole document | 1-25 |
| A | WO2009020358A1（LG ELECTRONICS INC）12 Feb. 2009（12.02.2009）<br>The whole document | 1-25 |

☐ Further documents are listed in the continuation of Box C.      ☒ See patent family annex.

| | |
|---|---|
| *      Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim (S) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"document member of the same patent family |

| Date of the actual completion of the international search | Date of mailing of the international search report |
|---|---|
| 15 Dec. 2010 (15.12.2010) | **06 Jan. 2011 (06.01.2011)** |
| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br>CHENG, Dong<br>Telephone No. (86-10)62413366 |

Form PCT/ISA /210 (second sheet) (July 2009)

## INTERNATIONAL SEARCH REPORT
Information on patent family members

| | International application No. |
|---|---|
| | *PCT/CN2010/077078* |

| Patent Documents referred in the Report | Publication Date | Patent Family | Publication Date |
|---|---|---|---|
| CN101795492A | 04.08.2010 | None | |
| CN101222291A | 16.07.2008 | WO2009086736A1 | 16.07.2009 |
| CN101594211A | 02.12.2009 | None | |
| WO2009020358A1 | 12.02.2009 | KR20090015778A | 12.02.2009 |
| | | KR20090086445A | 12.08.2009 |
| | | EP2109946A1 | 21.10.2009 |
| | | GB2460002A | 18.11.2009 |
| | | US2010046460A1 | 25.02.2010 |
| | | KR100943154B1 | 22.02.2010 |
| | | CN101682414A | 24.03.2010 |

Form PCT/ISA /210 (patent family annex) (July 2009)